# FASCICULE DE BREVET EUROPEEN

(11) **EP 1 857 969 B1**
(45) Date de publication et mention de la délivrance du brevet: **11.04.2012**
(21) Numéro de dépôt: 07112462.2
(22) Date de dépôt: 15.04.1999
(51) Int. Cl.: G06K 19/077, B29C 45/14

(54) **Moule pour la fabrication d'une carte à circuit intégré à contact**
Gussform zur Herstellung einer mit Kontakten versehenen IC-Karte
Mould for making a contact integrated circuit card

(30) Priorité: 22.04.1998 FR 9805625
(43) Date de publication de la demande: 21.11.2007
(62) Demande divisionnaire de: 99914591.5
(73) Titulaire: Gemalto SA, 92190 Meudon (FR)
(72) Inventeur: Elbaz, Didier, 13010 Marseille (FR)

(56) Documents cités:
- EP-A- 0 897 785
- EP-A1- 0 521 778
- US-A- 5 681 356

## Description

L'invention concerne un moule conçu pour la fabrication d'une carte à circuit intégré.

EP-A-0 521 778 décrit un procédé de fabrication d'une carte à circuit intégré à contact, du type dans lequel la carte comporte un support, qui est réalisé par moulage en matière plastique, qui est en forme de plaque selon premier format, et qui porte au moins un microcircuit électronique et une série de plages de contact pour le raccordement électrique du microcircuit à un circuit d'exploitation, et du type dans lequel la carte comporte une fente de contour qui est formée dans le support, autour d'une portion interne comportant le microcircuit et la série de plages de contact, pour délimiter, à l'intérieur d'une portion externe selon le premier format, une mini-carte selon un second format, la mini-carte étant reliée au support de la carte par des bretelles, réalisées venues de matière avec le support, et pouvant être détachée de la portion externe du support.

Selon un procédé connu de fabrication d'une telle carte, le support de la carte à circuit intégré est réalisé par moulage en matière plastique ou par lamination, puis le circuit intégré est incorporé dans le support de la carte au cours d'une opération dite d'encartage.

Ce n'est qu'à la fin de la fabrication de la carte que la prédécoupe est réalisée, par exemple par poinçonnage ou à l'aide d'un outil de découpe tel qu'un faisceau laser ou un jet d'eau à haute pression. Cette manière de procéder nécessite une opération supplémentaire qui est lourde à mettre en oeuvre et peu productive.

Cette opération supplémentaire nécessite un positionnement précis de la carte par rapport à l'outil qui effectue la découpe, notamment du fait qu'il est nécessaire de respecter une position précise des plages de contact du microcircuit par rapport aux bords de la mini-carte, ceci afin de respecter la norme.

Par ailleurs, cette opération présente l'inconvénient qu'il peut subsister des traces de cette opération de découpe, par exemple des bavures.

L'invention a donc pour but de proposer un moule conçu pour la fabrication d'une carte à circuit intégré permettant de réaliser de manière simple et économique une carte bi- standards dans laquelle la mini-carte peut être facilement détachée de la portion externe de la carte.

Dans ce but, l'invention propose un moule selon la revendication 1.

D'autres caractéristiques et avantages de l'invention apparaîtront à la lecture de la description détaillée qui suit en référence aux dessins annexés dans lesquels :

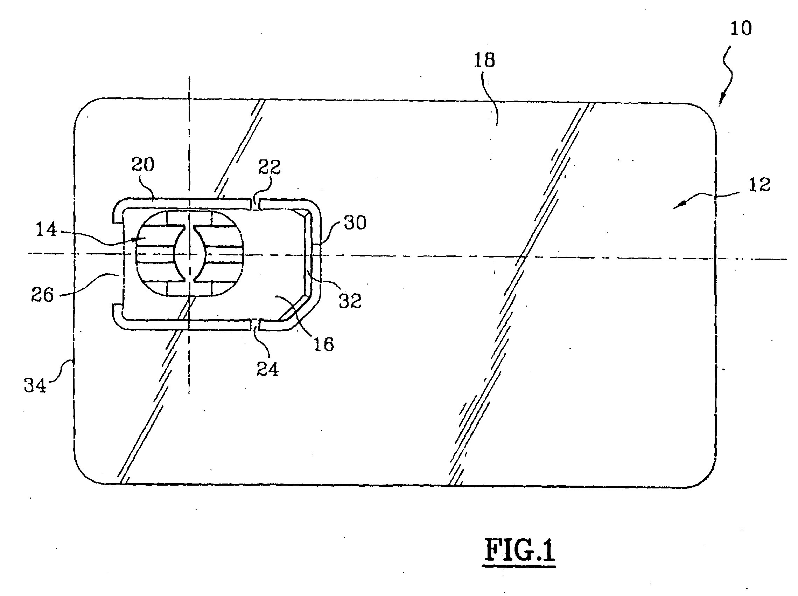

- la figure 1 est une vue en plan d'une carte;
- la figure 2 est une vue agrandie d'un détail de la figure 1 illustrant plus particulièrement la fente qui délimite la mini-carte ; et
- les figures 3 et 4 sont des vues en coupe selon les lignes 3-3 et 4-4 de la figure 2..

On a représenté sur les figures une carte 10 à circuit intégré, couramment appelée carte à puce, dans laquelle un support 12, généralement réalisé en matière plastique, porte un circuit intégré ou microcircuit électronique qui est généralement intégré dans l'épaisseur du support 12 de la carte 10. Le support 12 présente une forme de plaque rectangulaire à coins arrondis dont les dimensions et l'épaisseur sont définis par une norme, par exemples les normes internationales IS07816-1 et 7816-2 qui sont les normes les plus répandues pour les cartes de crédit ou les cartes téléphoniques habituelles.

Le circuit intégré 10 comporte des plages de contact 14 qui sont destinées à affleurer à la surface du support 12 et qui permettent d'établir des connexions électriques entre le microcircuit et un circuit d'exploitation des informations portées ou transmises par la carte 10.

A titre d'exemple, le circuit d'exploitation est généralement intégré dans un appareil qui est pourvu d'un connecteur dans lequel l'utilisateur introduit la carte 10. Le connecteur est pourvu d'une série de lames de contact destinée à venir en appui sur les plages de contact 14 de la carte 10 lorsque celle-ci est en position dans le connecteur.

Bien entendu, pour que le contact entre les lames du connecteur et les plages de contact 14 soit réalisé à coup sûr, la norme définit une position bien déterminée du microcircuit et des plages de contact 14 par rapport aux bords du support 12.

Toutefois, il est apparu des applications dans lesquelles la carte à avantage à être de dimensions beaucoup plus réduite. Ainsi, notamment pour certains combinés téléphoniques portables, de type "GSM", il est préférable d'utiliser des cartes selon une seconde norme dans lesquelles les dimensions du support 12 sont beaucoup plus réduites. Cependant, à l'exception de la taille du support les deux standards de carte ainsi définis mettent en oeuvre les mêmes microcircuits électroniques, dans les mêmes applications.

II est donc apparu le besoin de proposer des cartes à circuit intégré qui puissent être utilisées selon les deux formats, c'est-à-dire soit sous la forme d'une carte au format carte de crédit classique soit sous la forme d'une mini-carte de dimensions réduites.

Dans ce but, il a donc déjà été proposé des procédés de fabrication de cartes dans lesquels on délimite dans le support 12 une portion interne 16 d'une portion externe 18, les deux portions étant délimitées par une prédécoupe qui est prévue de manière que, lorsque l'on veut détacher la mini-carte, la séparation des portions interne 16 et externe 18 du support 12 se fait le long de la prédécoupe.

Les figures illustrent un mode préféré de réalisation de l'invention dans lequel la prédécoupe est réalisée sous la forme d'une fente 20 discontinue. La fente 20, qui s'étend autour du circuit intégré, présente un profil sensiblement rectangulaire défini en fonction de la norme G. S. M 11.11. Elle est interrompue de manière à laisser subsister des bretelles 22,24,26 qui permettent à la portion interne 16 du support 12, qui porte le circuit intégré, de rester solidaire de la portion externe 18.

La carte 10 peut alors être utilisée telle qu'elle, au format classique des cartes de crédit, mais il est aussi possible de l'utiliser au format "minicarte" en détachant la portion interne 16 qui porte la puce de la portion externe 18. La mini-carte est détachée soit en découpant les bretelles 22, 24,26 à l'aide d'un outil, soit en provoquant la rupture de ses bretelles par pression sur la portion interne 16, à l'aide d'un outil ou, plus simplement, avec le doigt.

Conformément aux enseignements de l'invention, le support 12 est réalisé par moulage en matière plastique et la fente 20 est réalisée directement lors de l'opération de moulage du support 12 grâce à une forme complémentaire du moule.

Ainsi, à partir du support 12 ainsi réalisé, on peut obtenir une carte bi-standards en appliquant au support 12 le même procédé que pour la fabrication d'une carte mono-standard, sans qu'il y ait besoin de recourir à une étape de fabrication supplémentaire.

La réalisation de la fente 20 directement au cours du moulage du support 12 permet par ailleurs de simplifier considérablement d'autres opérations qui peuvent intervenir au cours du procédé de fabrication de la carte, en fonction de la destination de celle-ci.

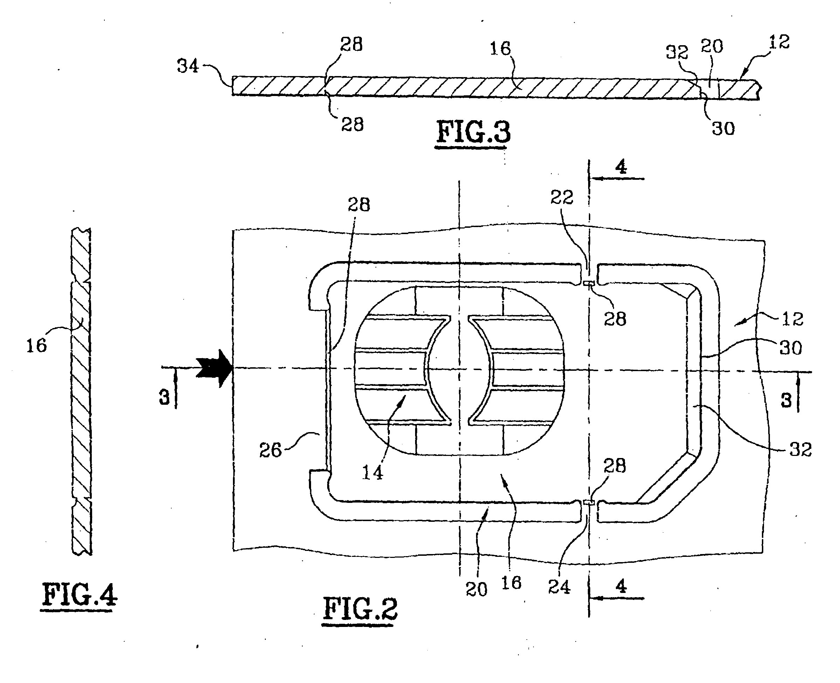

Comme on peut le voir plus particulièrement sur les figures 2 à 4, les bretelles de liaison 22,24,26, qui relient la portion interne 16 à la portion externe 18 du support 12, peuvent être munies d'amorces de rupture destinée à faciliter le détachage de la portion interne 16 qui est destinée à former la mini-carte par rapport à la portion externe 18, notamment lorsque ce détachage doit se faire par simple pression.

Les amorces de rupture sont généralement réalisées sous la forme d'au moins une empreinte 28 en creux aménagée dans l'une des faces du support 12 en forme de plaque, au travers de la bretelle considérée. Ces empreintes sont destinées à diminuer localement l'épaisseur de la bretelle pour la fragiliser à un endroit particulier où l'on souhaite que se réalise la rupture lorsque la mini-carte est détachée de la portion externe 18 du support 12. Éventuellement, une même bretelle peut comporter des empreintes en creux aménagées en regard l'une de l'autre dans chacune des deux faces du support 12 pour augmenter encore la fragilité de l'amorce de rupture. Les empreintes 28 présentent généralement la forme d'une entaille allongée perpendiculaire à la bretelle et, comme on peut le voir sur les figures 3 et 4, elles peuvent présenter, en section transversale, divers types de profils.

Dans le cadre de l'invention, on réalise la prédécoupe, fentes, empreintes, creux en une seule opération de moulage. En particulier, ces empreintes 28 sont réalisées simultanément au moulage du support, en même temps que la fente 20. On obtient ainsi une garantie quant à la précision du positionnement de l'amorce de rupture 28 par rapport aux bretelles et par rapport aux bords de la mini-carte.

L'invention est particulièrement avantageuse dans la mesure où il est possible d'obtenir directement une section au niveau des bretelles qui soit d'épaisseur inférieure à celle du corps de carte.

En variante, on peut également obtenir directement par injection une diminution d'épaisseur de la carte tout autour de la mini-carte avec ou sans bretelles.

De préférence, la variation d'épaisseur s'effectue d'un seul côté notamment le même côté que celui ou débouche la cavité, laissant l'autre côté inaltéré. L'avantage est d'offrir la possibilité d'une impression complète également inaltérée sur le verso de la carte.

De même, on peut voir que la mini-carte comporte un bord, délimité par la fente 20, qui présente un chanfrein 32, par exemple en vue de faciliter l'introduction ou le retrait de la mini-carte dans un connecteur correspondant. Dans le cadre de la fabrication d'une carte 10, le chanfrein 32 est aussi réalisé directement lors de l'opération de moulage du support 12, en même temps que la réalisation de fente 20.

Une technique de moulage particulièrement adaptée à la fabrication du support de carte est l'injection de matière plastique, notamment en ABS.

Les points d'injection peuvent être situés à différents endroits notamment sur un champ latéral de la portion externe ou au niveau de la mini-carte, par exemple dans la cavité.

De préférence, on adopte un point d'injection sur la mini-carte et sur un champ latéral de la portion externe. Leur position exacte peut être optimisée par une méthode informatique de simulation d'injection appelée «Mold Flow».

Dans l'exemple de réalisation illustré sur les figures, l'une 26 des bretelles de liaison présente une largeur importante, très supérieure à celle des autres bretelles 22,24.

En l'espèce, cette bretelle 26 est par ailleurs agencée à proximité d'un bord externe 34 du support 12.

Aussi, pour réaliser l'injection de matière dans le moule, il est particulièrement intéressant de prévoir que celle- ci se fasse au niveau dudit bord externe 34, dans le plan de la plaque formée par le support 12, en direction de la bretelle 26 de largeur importante. Le flux de matière dans le moule se trouve ainsi facilité grâce à la forte section de passage au niveau de la bretelle 26 de largeur importante qui permet un remplissage optimal de la partie du moule qui est destinée à former la portion interne 16 du support de carte 12.

Par ailleurs, lorsque le support de carte 12 est réalisé par moulage, il est généralement prévu que le microcircuit électronique et les plages de contact 14 soient pré-assemblés sous la forme d'un micromodule qui est ensuite destiné à être reçu dans une cavité formée dans le support 12, en l'occurrence dans la portion interne 16 de celui-ci qui est destinée à former la mini-carte.

Dans le cadre de l'invention la cavité est réalisée directement lors de l'opération de moulage du support 12, en même temps que la fente 20.

A titre de variante (non représentée), on peut prévoir que la prédécoupe soit réalisée sous la forme d'une rainure qui entoure la portion interne du support et au niveau de laquelle le support présente une épaisseur réduite. Cette rainure forme donc une zone de fragilité qui est par exemple susceptible de rompre si l'on appuie sur la portion interne du support, avec un outil ou avec le doigt.

## Revendications

1. Moule conçu pour la fabrication, par injection de matière plastique, d'une carte à circuit intégré, ladite carte comportant un support (12) d'un premier format, au moins un microcircuit électronique et une série de plages de contact (14) pour le raccordement électrique du microcircuit à un circuit d'exploitation, ladite carte comportant en outre une prédécoupe de contour (20) formée dans le support (12) autour d'une portion interne (16)comportant le microcircuit et la série de plages de contact (14), pour délimiter, à l'intérieur d'une portion externe (18) selon le premier format, une mini-carte selon un second format, la mini-carte étant reliée à la portion externe (18) du support (12) de manière à pouvoir en être séparée facilement le long de la prédécoupe, ledit moule étant **caractérisé en ce qu'**il présente une forme complémentaire de celle du support (12), de sorte que la prédécoupe (20) est réalisée directement lors du moulage du support (12) et en même temps qu'une cavité est formée dans la portion interne (16), ladite cavité étant destinée à recevoir ensuite un micromodule comportant le microcircuit électronique et les plages de contact.

## Claims

1. A mould adapted for producing, by injection of plastic material, an integrated circuit card, with said card including a substrate (12) having a first format, at least one electronic circuit and a series of contact pads (14) for the electric connection of the microcircuit to an operation circuit, with said card further including an outline score (20) formed in the substrate (12) around an internal portion (16) including the microcircuit and the series of contact pads (14), in order to define, within an external portion (18) according to the first format, a mini-card according to a second format, with the mini-card being linked to the external portion (18) of the substrate (12) so as to be easily detached therefrom, along the score, with said mould being **characterized in that** it has a shape matching that of the substrate (12), such that the score (20) is directly performed upon moulding the substrate (12) and simultaneously with the arrangement of a cavity in the internal portion (16), with said cavity being intended to subsequently receive a micro-module including the electronic micro-circuit and the contact pads.

## Patentansprüche

1. Form, ausgelegt für die Herstellung einer Karte mit integriertem Schaltkreis durch Einspritzung von Kunststoff, wobei die genannte Karte einen Träger (12) einem ersten Formats umfasst, mindestens einen elektronischen Mikroschaltkreis und eine Reihe von Kontaktfeldern (14) für den elektrischen Anschluss des Mikroschaltkreises an einen Betriebsschaltkreis, wobei die genannte Karte ferner einen Kontur-Vorausschnitt (20) aufweist, der im Träger (12) um einen internen Abschnitt (16) herum ausgebildet ist und die Mikroschaltung sowie die Reihe der Kontaktfelder (14) umfasst, um innerhalb eines externen Abschnitts (18) gemäß einem ersten Format eine Minikarte gemäß einem zweien Format abzugrenzen, wobei die Minikarte an den externen Abschnitt (18) des Trägers (12) derart angeschlossen ist, dass sie einfach von diesem entlang dem Vorausschnitt getrennt werden kann, wobei die genannte Form **dadurch gekennzeichnet ist, dass** sie eine die Form des Trägers (12) ergänzende Form aufweist, so dass der Vorausschnitt (20) direkt bei der Formung des Trägers (12) hergestellt wird, und dass gleichzeitig eine Aussparung im internen Abschnitt (16) gebildet wird, wobei die genannte Aussparung bestimmt ist, um später ein Mikromodul aufzunehmen, das den elektronischen Mikroschaltkreis und die Kontaktfelder aufweist.
